# EUROPEAN PATENT SPECIFICATION

(11) **EP 0 514 039 B1**
(45) Date of publication and mention of the grant of the patent: **01.03.1995**
(21) Application number: 92303872.3
(22) Date of filing: 29.04.1992
(51) Int. Cl.: F16L 55/26, B60D 1/18

(54) **Towing swivel for pipe inspection vehicle or other pipe vehicle**
Schwenkbare Anhängevorrichtung für Rohrinspektionsfahrzeug oder andere Rohrfahrzeuge
Dispositif d'attelage pivotant pour véhicules d'inspection de tuyaux ou autres véhicules dans des tuyaux

(30) Priority: 13.05.1991 GB 9110328
(43) Date of publication of application: 19.11.1992
(73) Proprietor: British Gas plc, London SW1V 3JL (GB)
(72) Inventor: Smart, David, Whitley Bay, Tyne & Wear NE26 2PJ (GB)
(74) Representative: Cummings, Robert James

(56) References cited:
- CH-A- 367 361
- GB-A- 893 801

## Description

The invention relates to pipe inspection or other vehicle having towing swivels, such vehicles being generally known in the art.

The invention has particular, though not exclusive, application to towed vehicles for inspecting buried cast iron gas pipes using flux leakage techniques. Another application is to vehicles designed to carry a camera through the pipe to inspect the pipe for inwardly directed protrusions or non-circularity; or to vehicles designed to locate side branch pipes leading off the main pipe; and machines designed to connect a replacement plastic branch pipe to a plastic liner occupying the main pipe.

In all such applications it is important that the vehicle shall successfully negotiate any bend it might encounter.

The object of the invention is to provide a pipe inspection or other vehicle having a towing swivel by which a vehicle may be towed.

According to the invention, a pipeline inspection or other vehicle is characterised in that the vehicle has a towing swivel at its front end rotatable about the central longitudinal axis of the vehicle, the swivel comprising a load bar which as seen in a side view of the vehicle extends transversely with respect to said axis and which as seen in a frontal view of the vehicle extends radially with respect to said axis, and a link or clip is freely slidable along the load bar for connection to a towing means, the link or clip moving between a first position on the load bar and a second position on the load bar as the vehicle travels first in a straight path and then in a curved path as the vehicle traverses a bend in the pipe, said second position being further from the said axis and closer to the centre of curvature of said curved path than is said first position.

Embodiments of pipe inspection vehicles will now be described by way of example with reference to the accompanying drawings in which:-
Figure 1 is a plan of a pipe inspection vehicle in a gas pipe;
Figure 2 is a plan of a first embodiment of swivel forming part of the vehicle shown in Figure 1;
Figure 3 is front elevation of the swivel shown in Figure 2;
Figure 4 is a plan, partly in horizontal section, of a second embodiment of towing swivel shown secured to a pipe inspection vehicle shown in ghost outline; and
Figure 5 is a front elevation of the swivel, partly in vertical section, shown in Figure 4.

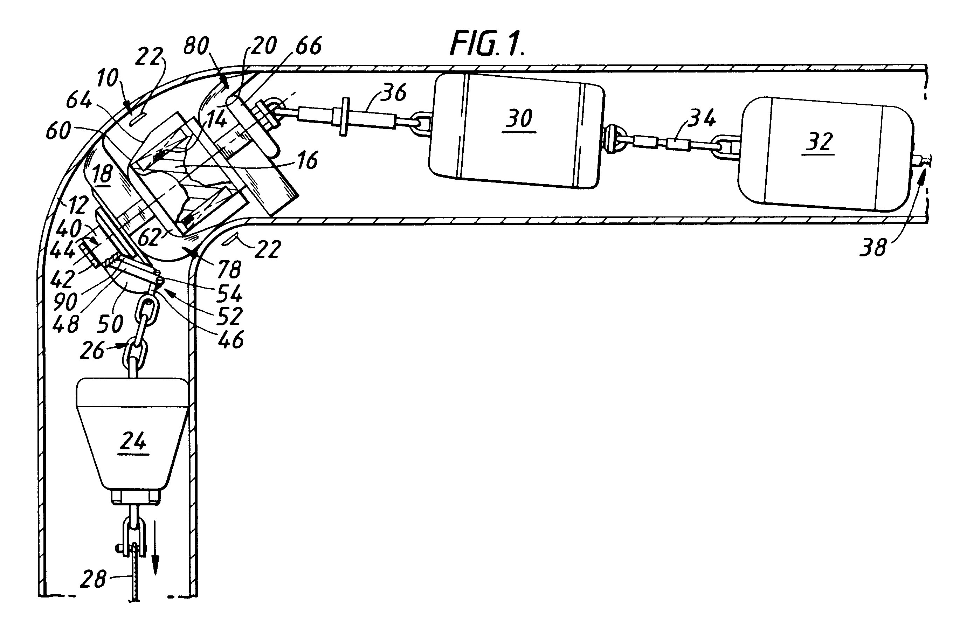

One embodiment of vehicle is shown in Figures 1 to 3 of the accompanying drawings. In this example the vehicle 10 is a magnetic vehicle for inspecting a gas pipe 12 for external corrosion defects (known as metal loss defects) using the flux leakage detection system. The vehicle 10 comprises an electromagnet 14 having its turns wound around a ferromagnetic core 16 having its central longitudinal axis coincident with the lengthwise direction of the vehicle 10. At each end of the electromagnet there is a pack of ferromagnetic foils 18, 20 for transferring flux from the magnet 14 to the wall of the pipe 12. A circumferential array of sensors 22 is mounted around the magnet 14 to detect magnetic flux which is deflected internally out of the pipewall by the presence of defects on the outer surface of the pipe 12.

The vehicle 10 is in train with a leading vehicle 24, to which it is connected by a towing means in the form of a chain 26. The vehicle 24 is towed in the direction of the arrow through the pipe (which has been purged of gas) by a cable 28 connected to a winch (not shown). The vehicle 10 is also in train with two trailing vehicles, the first being a data processing vehicle 30 and the second being a power vehicle 32. The vehicles 30 and 32 are connected by a towing link 34 and both are connected to the vehicle 10 by a towing link 36. The vehicle 32 pulls an armoured umbilical cable 38 which supplies electric power to the vehicles 10 and 30 and also passes the inspection data from the sensors 22 to a computer (not shown) at the ground surface.

The chain 26 is connected to a swivel 40 at the front of the vehicle 10. The swivel 40 is rotatable about a bolt 42 which is screwed into the front end of the vehicle body with its longitudinal central axis coincident with the central longitudinal axis 44 of the vehicle 10.

The last link 46 of the chain 26 is freely slidable on a load bar 48 of the swivel 40. The load bar 48 extends between two guard members 50 each presenting a guard surface 52 at its extremity and the surface 52 of each guard member 50 also extending in a curve towards the axis 44. The guard members 50 are connected by a short cross-bar 54 to which the load bar 48 is secured by welding.

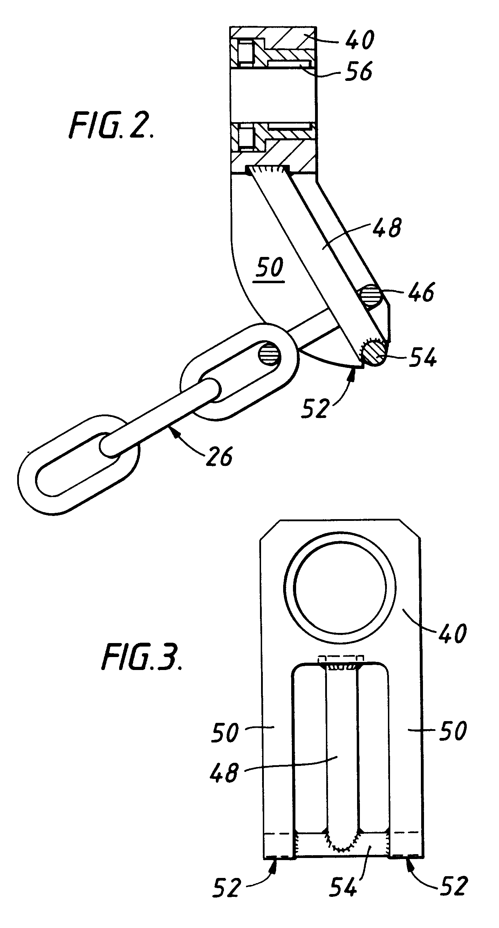

Figures 2 and 3 show the swivel 40 in detail. The swivel 40 has needle bearings 56 which run on the bolt 42.

Figure 1 shows the body 60 of the vehicle 10, which includes a forward stop 62, intermediate stop members 64 and a rear stop 66. Each foil in the packs 18, 20 is a stamping cut from a sheet of ferromagnetic material. The outer portion of each foil is formed as a circular array of fingers. Figure 1 shows the foils in their underformed condition. The foils are slightly deformed when the vehicle 10 is installed in a straight pipe. When the vehicle 10 negotiates a bend, as shown in Figure 1, the foils are severely deformed as shown in ghost outline at 78 and 80. The leading foils are bent backwardly to engage the forward stop and the intermediate stop members 64 adjacent the inner pipewall of the bend. The trailing foils engage the rear stop 66 adjacent the outer pipewall of the bend.

The sensors 22 are shown in Figure 1 in the positions they occupy when the vehicle 10 is outside the pipe. When the vehicle 10 is installed in a straight pipe the mountings of the sensors 22 (not shown) allows the sensors 22 to occupy positions inward from the positions shown.

### OPERATION

The electromagnet 14 produces an extremely strong field which passes into the pipewall 12 through one set of foils and returns to the core 16 via the other set of foils. Considerable drag forces arise at the interfaces between the foils and the pipewall 12.

In a straight pipe the swivel 40 occupies a position about the longitudinal axis 44 such that the load bar 48 is vertical and directed downwards. In other words the load bar 48 is at 90° to the position shown in Figure 1. The link 46 occupies a first position as close as possible to the axis 44, as indicated at 90 in Figure 1 showing part of the link 46.

The vehicle 10 is required to successfully pass around very severe bends in the pipe 12. As shown for example, the six-inch (15.24 cm) pipe 12 has one-diameter bends, one of which is illustrated. A one-diameter bend is one in which the radius of curvature of the bend (measured to the pipe centre) is equal to the internal diameter of the pipe.

As a bend is approached, the line of action of the chain 26 changes relative to the load bar 48 and the swivel 40 is pulled into the position shown and at the same time the link 46 moves into the second position (as shown) further from the axis 44.

In certain circumstances, the guard surfaces 52 engage the inside of the pipewall 12 and prevent further deformation of the foils 18.

The line of action of the chain 26 has been moved to a position (as the vehicle 10 runs round the bend) in which it makes a smaller angle with the axis 44 than it would have done had the chain 26 been attached to an eye on the end of the bolt 42. As a result, the vehicle 10 travels smoothly around the bend instead of jamming in the bend owing to excessive friction at the pipewall and consequential turning moments on the vehicle.

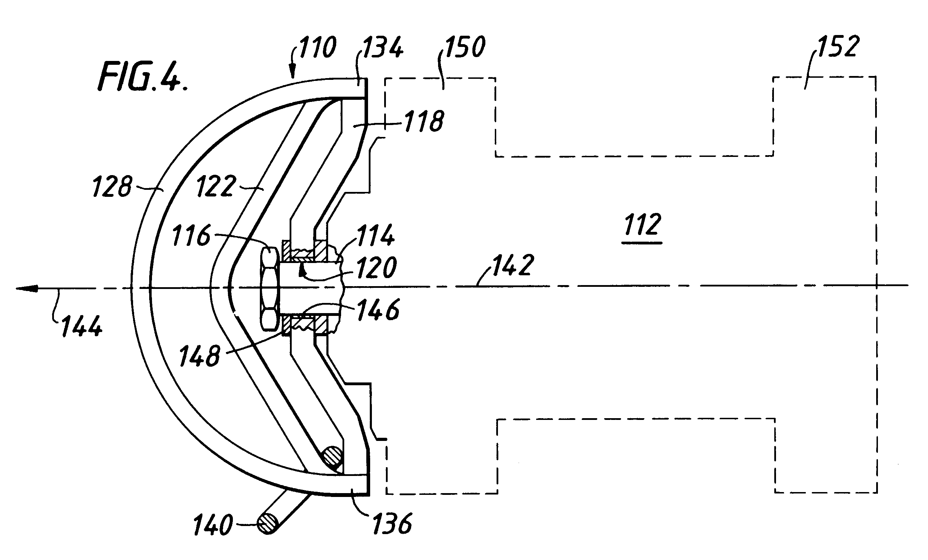

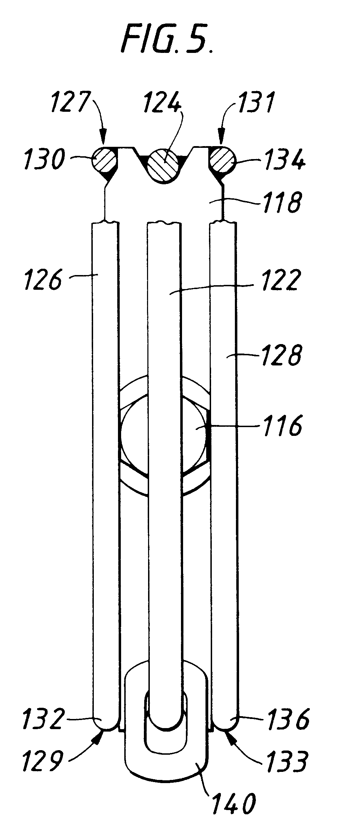

A second embodiment of swivel 110 is shown in Figures 4 and 5. It is shown attached to the front end of a vehicle 112. The swivel 110 consists of the following principal parts: a bolt 114 which is secured to a tapped hole in the leading end of the vehicle 112; the bolt 114 having a head 116; a beam 118 having a central aperture 120 through which the bolt 14 passes, the beam 118 being freely rotatable on the bolt 114; a load bar 122 of shallow V-shape with its ends 124 secured to the ends of the beam 118; two arcuate guard members 126, 128 having their ends 130, 132 and 134, 136, respectively, secured to the ends of the beam 118; and a link 140 freely slidable along the load bar 122. The guard members 126, 128 each present guard surfaces 127, 129; 131, 133, respectively.

The swivel 110 has an axis of rotation 142 defined by the bolt 114 and has a line of forward movement, with the vehicle 112, coincident with said axis 142 and indicated by the arrow 144.

Before the load bar 122 and the skid bars 126 and 128 are welded to the beam 118, it is ensured that the bearing 146, the bolt 114, the washer 148 and the link 140 are all fitted and retained in their proper positions. Thus, the lower parts of the V-shape of the load bar 122 allow the head 116 of the bolt 114, when the swivel 110 is unsecured to its vehicle 112, to move but otherwise the lower parts trap the bolt 114 in its aperture 120. The swivel 110 is thus self-contained and complete when it is removed from the vehicle 112.

The vehicle 112 is similar to the vehicle 10 and has packs of foils 150, 152 shown in outline in Figure 4.

In straight pipe the vehicle 110 is towed from the centre of the load bar 122, the link 140 occupying its first position, in this case a position coincident with the axis 142. This ensures minimum side loading on the vehicle 110. On approaching a bend, the swivel 110 is pulled by the chain (of which only the trailing link 140 is shown) and rotates about the bolt 114. The link 140 has already moved along the load bar 122 so that one end of the load bar 122 (carrying the link 140) points to the inside of the bend around which the vehicle must pass. On subsequent entry to the bend the link 140 slides along the load bar 122 towards the second position, further from the axis 142 as shown in Figure 4.

As a result, the angle which the chain makes with the axis 142 is reduced in a manner similar to that described for the first embodiment and passage of the vehicle 110 around the bend is facilitated.

## Claims

1. A pipeline inspection or other vehicle (10; 112) having a towing swivel (40; 110) at its front end rotatable about the central longitudinal axis (44; 142) of the vehicle, characterised in that the swivel comprises a load bar which as seen in a side view of the vehicle extends transversely with respect to said axis and which as seen in a frontal view of the vehicle extends radially with respect to said axis, and a link or clip (46; 140) freely slidable along the load bar for connection to a towing means (26), the link or clip moving between a first position on the load bar and a second position on the load bar as the vehicle travels first in a straight path and then in a curved path as the vehicle traverses a bend in the pipe (12), said second position being further from said axis and closer to the centre of curvature of said curved path than is said first position.

2. A vehicle (10; 112) according to claim 1 in combination with a second vehicle (24) in train and ahead of said inspection or other vehicle (10; 112) and connected to it by said towing means (26).

3. A vehicle (10) according to claim 1 or claim 2, said swivel (40) having its centre of mass positioned to one side of said axis (44) and said load bar (48) being positioned to the same side.

4. A vehicle (112) according to claim 1, 2 or 3, said swivel (110) having a load bar (122) extending symmetrically on both sides of said axis (142).

5. A vehicle (112) according to claim 4, said load bar (122), or each half of said load bar, being inclined to said axis (142), said first position of the link (140) or clip being further from the rear of the vehicle (112) than said second position.

6. A vehicle according to any preceding claim, the swivel (40; 110) comprising a guard surface or surfaces (52; 127, 129; 131, 133) lying ahead of said load bar (48; 122).

7. A vehicle according to claim 6, said load bar (48; 122) lying between two guard members (50; 126, 128) each providing a respective one of said guard surfaces (52; 129, 133) when viewed from the front of the vehicle (10; 112).

8. A vehicle according to any preceding claim, the swivel (40; 110) comprising a fixed axle (42; 114) mounted on the front of the vehicle (10; 112), said second position of said link or clip (46; 140) being behind the leading end of said axle (42; 114).

9. A vehicle according to any preceding claim, said swivel (40; 110) being mounted on bearings (56; 146).

## Patentansprüche

1. Rohrleitungsinspektionsfahrzeug oder ein anderes Fahrzeug (10; 112) mit einem Zugdrehgelenk (40; 110) an seinem vorderen Ende, welches um die Mittellängsachse (44; 142) des Fahrzeuges drehbar ist,
dadurch **gekennzeichnet,** daß
das Drehgelenk einen Zuglastaufnahmestab, welcher in einer Seitenansicht des Fahrzeuges sich quer bezüglich dieser Achse erstreckt und welcher in einer Vorderansicht des Fahrzeuges sich radial bezüglich dieser Achse erstreckt; und ein Verbindungsglied oder eine Verbindungsklemme (46; 140) aufweist, die frei entlang des Zuglastaufnahmestabes zur Verbindung mit einer Zugeinrichtung (26) gleitbar ist, wobei das Verbindungsglied oder die Verbindungsklemme sich zwischen einer ersten Stellung auf dem Zuglastaufnahmestab und einer zweiten Stellung auf dem Zuglastaufnahmestab bewegt, wenn sich das Fahrzeug zuerst auf einem geraden Weg und dann auf einem gekrümmten Weg bewegt, wenn das Fahrzeug durch eine Biegung in der Rohrleitung (12) lauft, wobei die zweite Stellung weiter weg von der Achse und näher an dem Krümmungsmittelpunkt des gekrümmten Weges ist als die erste Position.

2. Fahrzeug (10; 112) gemäß Anspruch 1 in Kombination mit einem zweiten Fahrzeug (24) in einer Zuganordnung und vor dem Inspektions- oder einem anderen Fahrzeug (10; 112) und damit durch die Zugeinrichtung (26) verbunden.

3. Fahrzeug (10) gemäß Anspruch 1 oder 2, bei welchem der Massenmittelpunkt des Drehgelenkes (40) an einer Seite der Achse (44) angeordnet ist und der Zuglastaufnahmestab (48) an derselben Seite augeordnet ist.

4. Fahrzeug (112) gemäß Anspruch 1, 2 oder 3, bei welchem das Drehgelenk (110) einen Zuglastaufnahmestab (122) aufweist, der sich symmetrisch an beiden Seiten der Achse (142) erstreckt.

5. Fahrzeug (112) gemäß Anspruch 4, bei welchem der Zuglastaufnahmestab (122) oder jede Hälfte des Zuglastaufnahmestabes bezüglich der Achse (142) geneigt ist, wobei die erste Stellung des Verbindungsgliedes (140) oder der Verbindungsklemme weiter weg von der Rückseite des Fahrzeuges (112) ist als die zweite Stellung.

6. Fahrzeug gemäß einem der vorhergehenden Ansprüche, bei welchem das Drehgelenk (40; 110) eine Schutzfläche oder Schutzflächen (52; 127, 129; 131, 133) aufweist, die vor dem Zuglastaufnahmestab (48; 122) liegt bzw. liegen.

7. Fuhrzeug gemäß Anspruch 6, bei welchem der Zuglastaufnahmestab (48; 122), welcher zwischen zwei Schutzbügeln (50; 126, 128) liegt, jeweils eine jeweilige der Schutzflächen (52; 129, 133) schafft, betrachtet von der Vorderseite des Fahrzeuges (10; 112).

8. Fahrzeug gemäß einem der vorhergehenden Ansprüche, bei welchem das Drehgelenk (40; 110) einen festen Achsbolzen (42; 114) aufweist, welcher an der Vorderseite des Fahrzeuges (10; 112) montiert ist, wobei die zweite Stellung des Verbindungsgliedes oder der Verbindungsklemme (46; 140) hinter dem Führungsende des Achsbolzens (42; 114) liegt.

9. Fahrzeug gemäß einem der vorhergehenden Ansprüche, bei welchem das Drehgelenk (40; 110) an Lagern (56; 146) montiert ist.

## Revendications

1. Véhicule (10 ; 112) d'inspection de canalisation ou autre ayant un émerillon (40 ; 110) de remorquage à son extrémité avant, pouvant tourner autour de l'axe longitudinal central (44 ; 142) du véhicule, caractérisé en ce que l'émerillon comporte une barre de charge qui, telle que vue dans une direction de côté du véhicule, s'étend transversalement par rapport audit axe et qui, telle que vue dans une direction frontale du véhicule, s'étend radialement par rapport audit axe, et un maillon ou étrier (46 ; 140) pouvant coulisser librement le long de la barre de charge pour être relié à un moyen de remorquage (26), le maillon ou étrier se déplaçant entre une première position sur la barre de charge et une seconde position sur la barre de charge pendant que le véhicule se déplace d'abord en ligne droite puis en courbe au moment où le véhicule passe dans un coude de la canalisation (12), ladite seconde position étant plus éloignée dudit axe et plus rapprochée du centre de courbure de ladite trajectoire en courbe que ne l'est ladite première position.

2. Véhicule (10 ; 112) selon la revendication 1, en combinaison en train avec un second véhicule (24) et en avant dudit véhicule (10 ; 112) d'inspection ou autre et relié à celui-ci par ledit moyen de remorquage (26).

3. Véhicule (10) selon la revendication 1 ou la revendication 2, dans lequel le centre de masse dudit émerillon (40) est positionné sur un côté dudit axe (44) et ladite barre de charge (48) est positionnée sur le même côté.

4. Véhicule (112) selon la revendication 1, 2 ou 3, dans lequel ledit émerillon (110) comporte une barre de charge (122) s'étendant symétriquement sur les deux côtés dudit axe (142).

5. Véhicule (112) selon la revendication 4, dans lequel ladite barre de charge (122) ou chaque moitié de ladite barre de charge, est inclinée par rapport audit axe (142), ladite première position du maillon (140) ou de l'étrier étant plus éloignée de l'arrière du véhicule (112) que ladite seconde position.

6. Véhicule selon l'une quelconque des revendications précédentes, dans lequel l'émerillon (40 ; 110) présente une surface ou des surfaces de garde (52 ; 127, 129 ; 131, 133) s'étendant en avant de ladite barre de charge (48 ; 122).

7. Véhicule selon la revendication 6, dans lequel ladite barre de charge (48 ; 122) s'étend entre deux éléments de garde (50 ; 126, 128) présentant chacun l'une, respective, desdites surfaces de garde (52; 129, 133), telles que vues depuis l'avant du véhicule (10 ; 112).

8. Véhicule selon l'une quelconque des revendications précédentes, dans lequel l'émerillon (40 ; 110) comporte un tourillon fixe (42 ; 114) monté sur l'avant du véhicule (10 ; 112), ladite seconde position dudit maillon ou étrier (46 ; 140) étant en arrière de l'extrémité avant dudit tourillon (42 ; 114).

9. Véhicule selon l'une quelconque des revendications précédentes, dans lequel ledit émerillon (40 ; 110) est monté sur des paliers (56 ; 146).
